# EUROPÄISCHE PATENTSCHRIFT

(11) **EP 4 365 384 B1**
(45) Veröffentlichungstag und Bekanntmachung des Hinweises auf die Patenterteilung: **28.05.2025**
(21) Anmeldenummer: 24165013.4
(22) Anmeldetag: 12.01.2021
(51) Int. Cl.: E04B 1/41, F16B 37/04

(54) **BEFESTIGUNGSVORRICHTUNG, MONTAGEEINHEIT UND VERFAHREN ZUR MONTAGE EINER HAMMERKOPFSCHRAUBE AN EINER ANKERSCHIENE**
FASTENING DEVICE, ASSEMBLY UNIT AND METHOD FOR MOUNTING A HAMMER HEAD SCREW ON AN ANCHOR RAIL
DISPOSITIF DE FIXATION, UNITÉ DE MONTAGE ET PROCÉDÉ DE MONTAGE D'UNE VIS À TÊTE DE MARTEAU SUR UN RAIL D'ANCRAGE

(30) Priorität: 05.02.2020 DE 102020102977
(43) Veröffentlichungstag der Anmeldung: 08.05.2024
(62) Teilanmeldung aus: 21700847.3
(73) Patentinhaber: Wilhelm Modersohn GmbH & Co. KG, 32139 Spenge (DE)
(72) Erfinder: MODERSOHN, Wilhelm Jochen Peter, 32139 Spenge (DE)
(74) Vertreter: Dantz, Jan Henning

(56) Entgegenhaltungen:
- CN-A- 108 086 484
- CN-U- 202 466 908
- DE-A1- 19 705 709
- DE-U1- 202007 019 242

## Beschreibung

Die vorliegende Erfindung betrifft eine Befestigungsvorrichtung für eine Ankerschiene mit einer Hammerkopfschraube und einer an der Hammerkopfschraube fixierten Halteplatte mit mehreren Zähnen für den Eingriff mit einer Verzahnung an der Ankerschiene, und einer Öffnung, durch die ein Gewindebolzen der Hammerkopfschraube durchgeführt ist, wobei an der Halteplatte mindestens ein in die Öffnung der Halteplatte ragender Raststeg (25) vorgesehen ist, mittels dem die Halteplatte an dem Gewindebolzen der Hammerkopfschraube verrastbar ist, wobei der mindestens eine Raststeg integral mit einem plattenförmigen Rastelement mit einer Öffnung zum Durchführen des Gewindebolzens der Hammerkopfschraube ausgebildet ist, eine Montageeinheit und ein Verfahren zur Montage einer Hammerkopfschraube an einer Ankerschiene.

Die DE 10 2009 032 032 A1 offenbart eine Hammerkopfschraube zur Montage an einer Ankerschiene, bei der auf die Hammerkopfschraube ein plattenförmiges Zahnteil aufgesteckt wird, das mit einer Verzahnung einer Ankerschiene in Eingriff gelangt. Das Zahnteil weist eine Durchgangsbohrung auf, in die der Schraubenschaft eingesteckt wird, um dann die Hammerkopfschraube mit dem Zahnteil an der Ankerschiene zu montieren. Um die Hammerkopfschraube an der Ankerschiene vorzufixieren, kann eine Leiste aus einem elastischen Schaumstoffmaterial in der Ankerschiene angeordnet sein, so dass der Kopf der Hammerkopfschraube gegen die nach innen ragenden Stege an der Ankerschiene gedrückt wird. Wenn die elastische Leiste allerdings aus der Ankerschiene entfernt wird, kann die Hammerkopfschraube mit dem Zahnteil in die Ankerschiene eintauchen und dann herunterfallen, was die Montage erschwert, gerade wenn Zahnteil und Hammerkopfschraube sich wieder voneinander lösen.

CN 202 466 908 U offenbart eine Befestigungsvorrichtung mit einer Ankerschiene, an der eine Ankerkopfschraube mit einer Profilierung an einem Schraubenkopf fixierbar ist. Ein Gewindeabschnitt der Hammerkopfschraube wird durch eine Rasteinrichtung durchgeführt.

Weitere Befestigungsvorrichtungen zeigen DE 20 2007 019 242 U1, DE 197 05 709 A1 und CN 108 086 484 A.

Es ist daher Aufgabe der vorliegenden Erfindung, eine Befestigungsvorrichtung für eine Ankerschiene und ein Verfahren zur Montage einer Hammerkopfschraube an einer Ankerschiene zu schaffen, die die oben genannten Probleme vermeiden und eine effektive Montage an der Ankerschiene ermöglichen.

Diese Aufgabe wird mit einer Befestigungsvorrichtung mit den Merkmalen des Anspruches 1 sowie einem Verfahren des Anspruches 10 gelöst.

Die erfindungsgemäße Befestigungsvorrichtung umfasst eine Hammerkopfschraube und eine an der Hammerkopfschraube fixierte Halteplatte mit mehreren Zähnen für den Eingriff mit einer Verzahnung an einer Ankerschiene und einer Öffnung, die von einem Gewindebolzen der Hammerkopfschraube durchgriffen ist, wobei mindestens ein in die Öffnung der Halteplatte ragender Raststeg vorgesehen ist, mittels dem die Halteplatte an dem Gewindebolzen der Hammerkopfschraube verrastbar ist. Dadurch bilden Halteplatte und Hammerkopfschraube eine verrastbare Einheit, die leichter an einer Ankerschiene montiert werden kann. Der Raststeg nutzt dabei die Profilierung des Gewindebolzens durch die Ausbildung der einzelnen Gewindegänge, um eine Verrastung zwischen Halteplatte und Hammerkopfschraube zu bewirken.

Vorzugsweise sind über den Umfang verteilt mehrere Raststege an der Öffnung der Halteplatte vorgesehen. Beispielsweise können drei bis fünf Raststege zur Verrastung der Halteplatte an dem Gewindebolzen eingesetzt werden.

Die Raststege sind integral mit einem plattenförmigen Rastelement mit einer Öffnung zur Durchführung des Gewindebolzens ausgebildet. Das Rastelement ist dabei mit der Halteplatte verklebt oder verschweißt, insbesondere auf der zu dem Kopf der Hammerkopfschraube abgewandten Seite an der Halteplatte. Dadurch können die Halteplatte mit dem Rastelement als Einheit montiert werden.

Die Halteplatte ist vorzugsweise mindestens doppelt so dick wie das plattenförmige Rastelement, insbesondere viermal oder achtmal so dick. Während das Rastelement sehr dünn ausgebildet sein kann, insbesondere damit die Raststege federnd sind und eine gewisse Biegbarkeit besitzen, sollen über die Halteplatte Kräfte von der Ankerschiene übertragen werden, so dass diese deutlich dicker ausgebildet ist. Das Rastelement kann beispielsweise aus einem dünnen Blech oder einer Kunststoffplatte hergestellt sein. Die Halteplatte kann aus einem dickeren Blech hergestellt sein.

Die Halteplatte weist vorzugsweise an gegenüberliegenden Seiten Zähne auf, die zumindest teilweise von einem Vorsprung überdeckt sind. Dadurch kann die Halteplatte auf die Ankerschiene gesetzt werden, so dass die Zähne in Eingriff mit der Verzahnung an der Ankerschiene gelangen, wobei über den Vorsprung eine Bewegung der Halteplatte in axiale Richtung des Gewindebolzens begrenzt wird. Der Vorsprung kann dabei integral mit dem Rastelement ausgebildet sein, so dass über das Rastelement eine Positionierung an der Ankerschiene vorgenommen werden kann. Der Vorsprung kann dabei als biegbarer Steg ausgebildet sein, der optional zur Ebene des plattenförmigen Rastelementes geneigt ausgerichtet ist, beispielsweise in einem Winkel zwischen 2° bis 20°. Dadurch kann der Vorsprung bei der Montage an der Ankerschiene durch Eindrücken der Hammerkopfschraube leicht gebogen werden, so dass nach dem Drehen der Hammerkopfschraube ein Abschnitt der Ankerschiene klemmend zwischen dem Vorsprung und dem Kopf der Hammerkopfschraube angeordnet ist. Dadurch kann eine Vorfixierung an der Ankerschiene erreicht und ein Herabfallen der Einheit aus Hammerkopfschraube und Halteplatte sicher verhindert werden.

Die Halteplatte ist vorzugsweise dünner ausgebildet als ein Blech der Ankerschiene, an dem die Verzahnung ausgebildet ist. Dadurch ist sichergestellt, dass ein Bauteil klemmend an der Ankerschiene fixiert wird und die Halteplatte diese Klemmung nicht behindert.

Bei dem erfindungsgemäßen Verfahren wird zunächst eine Halteplatte mit mehreren Zähnen für den Eingriff mit einer Verzahnung an einer Ankerschiene auf einen Gewindebolzen einer Hammerkopfschraube aufgesetzt und dann linear auf den Gewindebolzen aufgeschoben, wobei mindestens ein Raststeg an dem Gewindebolzen rastend geführt ist. Der Raststeg besitzt eine gewisse Elastizität, um an den einzelnen Gewindegängen zu verrasten, kann aber durch einen gewissen Druck linear auf den Gewindebolzen aufgeschoben werden. Dadurch entfällt ein Aufdrehen der Halteplatte, was notwendig wäre, wenn die Halteplatte ein Innengewinde aufweisen würde. Anschließend wird die Einheit aus Hammerkopfschraube und Halteplatte auf eine Ankerschiene aufgesetzt, wobei die Zähne des Halters ein Eingriff mit der Verzahnung gelangen, damit dann die Hammerkopfschraube gedreht werden kann, bevor ein Bauteil an dem Gewindebolzen der Hammerkopfschraube fixiert wird.

Die Erfindung wird nachfolgend anhand eines Ausführungsbeispiels mit Bezug auf die beigefügten Zeichnungen näher erläutert. Es zeigen:
- Figuren 1A bis 1C: mehrere Ansichten einer erfindungsgemäßen Befestigungsvorrichtung in der montierten Position an einer Ankerschiene;
- Figuren 2A und 2B: zwei Ansichten der Halteplatte der Befestigungsvorrichtung der Figur 1, und
- Figuren 3A und 3B: zwei Ansichten der Hammerkopfschraube mit der Halteplatte.

Eine Ankerschiene 1 ist leistenförmig ausgebildet und umfasst eine Vielzahl von Ankerstegen 2, die integral mit einem ersten Schienenteil 3a und einem zweiten Schienenteil 3b ausgebildet sind. Die beiden Schienenteile 3a und 3b sind über Verbindungsstege 4 miteinander verbunden und weisen auf der einander zugewandten Seite beabstandet von den Verbindungsstegen 4 eine Verzahnung 5 auf. Zwischen der Verzahnung 5 und den Verbindungsstegen 4 ist ein Hohlraum ausgebildet, um Hammerkopfschrauben 10 zu montieren. Die Ankerschiene 1 kann so ausgebildet sein, wie dies im Detail in der DE 10 2019 106 155 beschrieben ist, auf die hiermit Bezug genommen wird.

Eine Befestigungsvorrichtung zur Fixierung an der Ankerschiene 1 umfasst eine Hammerkopfschraube 10, die einen im Wesentlichen quaderförmigen Kopf 11 und einen Gewindebolzen 12 aufweist. In der montierten Position hintergreift der Kopf 11 der Hammerkopfschraube 10 die leistenförmigen Stege an den Schienenteilen 3a und 3b, an denen jeweils eine Verzahnung 5 mit einer Vielzahl von Zähnen ausgebildet ist. Um die Hammerkopfschraube 10 in Längsrichtung der Ankerschiene 1 zu fixieren, ist eine Halteplatte 20 vorgesehen, die auf den Gewindebolzen 12 der Hammerkopfschraube 10 aufgesteckt ist. Die Halteplatte 20 umfasst an zwei gegenüberliegenden Seiten mehrere Zähne 27, die in Eingriff mit der Verzahnung 5 an der Ankerschiene 1 stehen. An der Halteplatte 20 ist ferner ein plattenförmiges Rastelement 22 fixiert, das Vorsprünge 24 umfasst, die auf den Stegen mit der Verzahnung 5 aufliegen. Dadurch wird verhindert, dass die Halteplatte 20 in den Hohlraum zwischen dem Verbindungssteg 4 und der Verzahnung 5 gelangt und die Zähne 27 in Eingriff mit der Verzahnung 5 bleiben. Die Vorsprünge 24 sind an gegenüberliegenden Seiten des Rastelementes 22 ausgebildet.

Das Rastelement 22 kann mit der Halteplatte 20 verklebt oder verschweißt sein. Ferner umfasst die Halteplatte 20 nach innen ragende Raststege 25, die an den Gewindegängen des Gewindebolzens 12 verrastbar sind. Dadurch wird die Hammerkopfschraube 10 über die Halteplatte 20 und das Rastelement 22 an der Ankerschiene 1 vorfixiert.

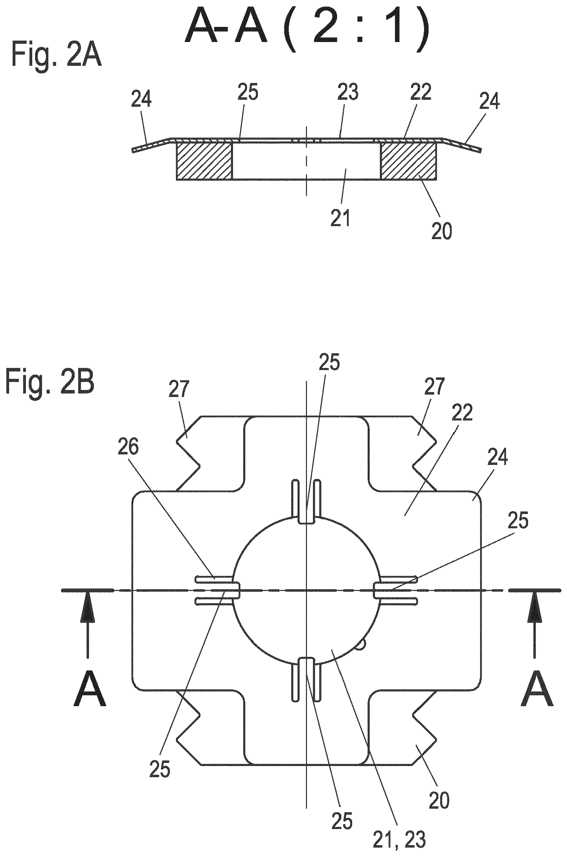

In den Figuren 2A und 2B ist die Halteplatte 20 mit dem plattenförmigen Rastelement 22 im Detail gezeigt. Es ist erkennbar, dass das plattenförmige Rastelement 22 deutlich dünner ausgebildet ist als die Halteplatte 20, beispielsweise beträgt die Dicke des plattenförmigen Rastelementes 22 nur zwischen 5 % bis 25 % der Dicke der Halteplatte 20. Das Rastelement 22 kann aus einem dünnen Blech hergestellt sein und mit der Halteplatte 20 verschweißt werden. Bei Herstellung des Rastelementes 22 aus Kunststoff kann auch ein Verkleben erfolgen.

Wie in Figur 2A gezeigt ist, sind die Vorsprünge 24 winklig zu der aus dem plattenförmigen Rastelement 22 gebildeten Ebene ausgerichtet, beispielsweise in einem Winkel zwischen 2° und 20°, insbesondere zwischen 5° und 15°. Dadurch lassen sich die Vorsprünge 24 bei der Montage der Hammerkopfschraube 10 biegen, so dass in der montierten Position ein Kopf 11 der Hammerkopfschraube 10 über die Vorsprünge 24 klemmend an den Stegen der Ankerschiene 1 anliegt und somit vorfixiert ist.

Die Halteplatte 20 umfasst eine zylindrische Öffnung 21, und das Rastelement 22 umfasst eine Öffnung 23, die im Wesentlichen deckungsgleich ausgebildet ist zu der Öffnung 21, wobei an dem Rastelement 22 über den Umfang verteilt mehrere Raststege 25 in die Öffnung 23 hineinragen. Der Abstand einer Spitze der Raststege 25 zu einem Mittelpunkt der Öffnung 23 ist somit geringer als der Radius der Öffnung 23. Die Raststege 25 sind biegbar ausgebildet und über Schlitze 26 seitlich beabstandet von dem Rastelement 22 angeordnet, wobei die Raststege 25 in Längsrichtung integral mit dem Rastelement 22 verbunden sind. In dem dargestellten Ausführungsbeispiel sind vier Raststege 25 vorgesehen, wobei die Zahl der Raststege 25 auch variiert werden kann.

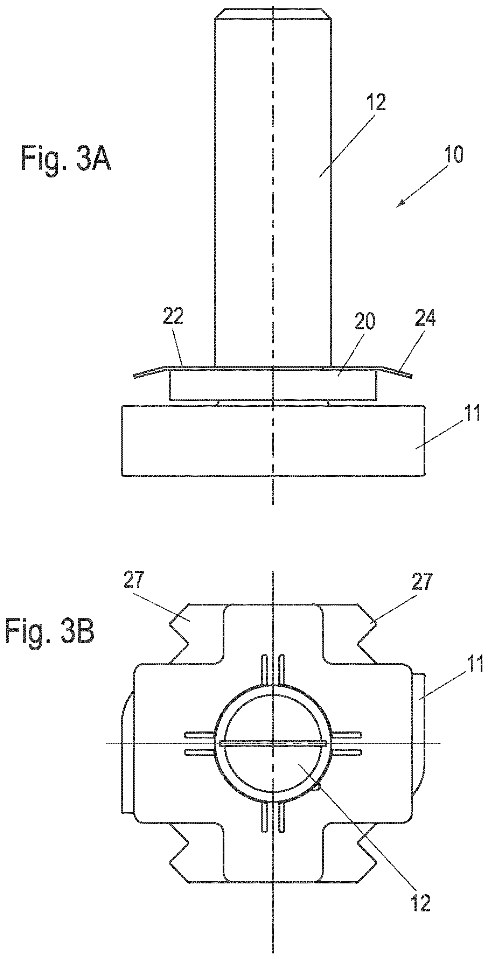

In den Figuren 3A und 3B ist die Befestigungsvorrichtung mit der Hammerkopfschraube 10 und der Halteplatte 20 gezeigt. Zur Herstellung dieser Montageeinheit wird die Halteplatte 20 mit dem Rastelement 22 zunächst an einer Spitze des Gewindebolzens 12 positioniert und dann linear auf den Gewindebolzen aufgeschoben, wobei die Raststege 25 entlang dem Gewindebolzen rastend geführt sind, d.h. an den einzelnen Gewindegängen verrastet werden können, je nachdem, wie weit die Halteplatte 20 aufgeschoben wird. Die Halteplatte 20 wird vorzugsweise bis zu dem Kopf 11 oder kurz davor aufgeschoben.

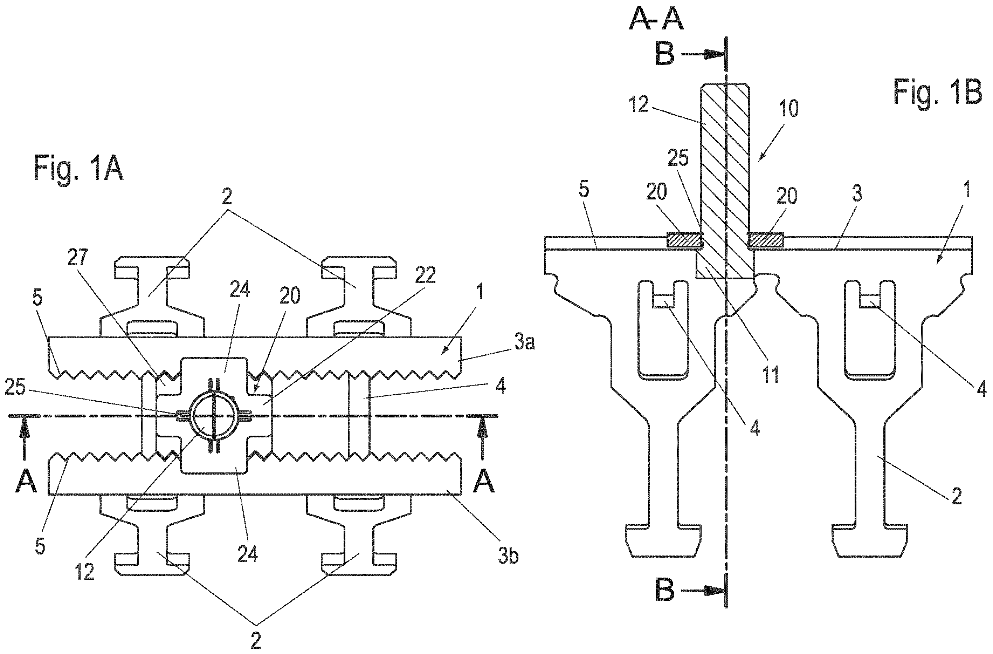

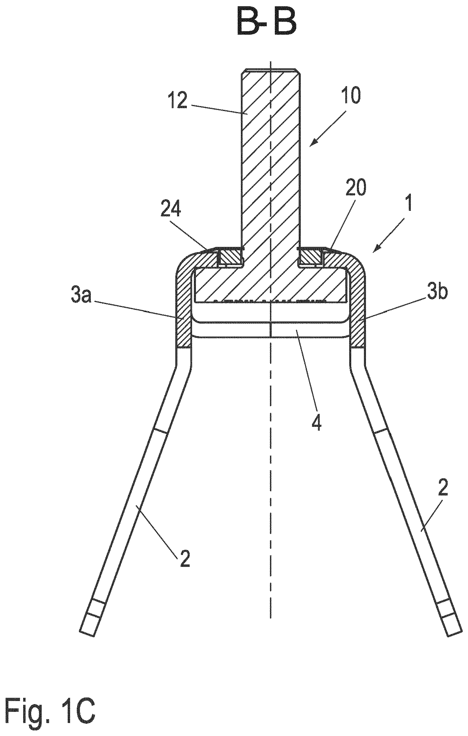

Die Montageeinheit kann nun an der vorzugsweise in Beton vergossenen Ankerschiene 1 montiert werden, indem der Kopf 11 in den Spalt zwischen den beiden Verzahnungen 5 eingefügt wird und die Zähne 27 in Eingriff mit der Verzahnung 5 gebracht werden. Dann kann der Gewindebolzen 12 leicht in Richtung der Ankerschiene 1 gedrückt werden, wodurch sich die Vorsprünge 24 verbiegen, um dann den Kopf 11 der Hammerkopfschraube 10 zu drehen, so dass der Kopf die beiden Stege mit der Verzahnung 5 hintergreift, wie dies in Figur 1C gezeigt ist. Nach dem Loslassen der Hammerkopfschraube 10 drücken die Vorsprünge 24 den Kopf 11 an die Unterseite der Stege, so dass die Montageeinheit klemmend an der Ankerschiene 1 festgelegt ist.

Die Ankerschiene 1 kann in der montierten Position, also in einem Bauteil aus Beton vergossen, in Längsrichtung Horizontal, Vertikal oder geneigt ausgerichtet sein. Durch die Befestigungsvorrichtung mit der Hammerkopfschraube 10 und der Halteplatte 20 wird bei jeder Ausrichtung der Ankerschiene 1 eine Vorfixierung erreicht. Dabei wird durch die Halteplatte 20, insbesondere die Vorsprünge 24 ein Durchstecken der Halteplatte 20 durch die Verzahnung 5 an der Ankerschiene 1 sicher verhindert. Die Länge der Ankerschiene 1 und die Anzahl der Befestigungsvorrichtungen pro Ankerschiene 1 kann dabei vom Fachmann je nach Anforderung gestaltet werden.

### Bezugszeichenliste

- 1: Ankerschiene
- 2: Ankersteg
- 3a, 3b: Schienenteil
- 4: Verbindungssteg
- 5: Verzahnung
- 10: Hammerkopfschraube
- 11: Kopf
- 12: Gewindebolzen
- 20: Halteplatte
- 21: Öffnung
- 22: Rastelement
- 23: Öffnung
- 24: Vorsprung
- 25: Raststeg
- 26: Schlitz
- 27: Zahn

## Patentansprüche

1. Befestigungsvorrichtung für eine Ankerschiene (1) mit einer Hammerkopfschraube (10) und einer an der Hammerkopfschraube (10) fixierten Halteplatte (20) mit mehreren Zähnen (27) für den Eingriff mit einer Verzahnung (5) an der Ankerschiene (1), und einer Öffnung (21), durch die ein Gewindebolzen (12) der Hammerkopfschraube durchgeführt ist, wobei an der Halteplatte (20) mindestens ein in die Öffnung (21) der Halteplatte (20) ragender Raststeg (25) vorgesehen ist, mittels dem die Halteplatte (20) an dem Gewindebolzen (12) der Hammerkopfschraube (10) verrastbar ist, wobei der mindestens eine Raststeg (25) integral mit einem plattenförmigen Rastelement (22) mit einer Öffnung (23) zum Durchführen des Gewindebolzens (12) der Hammerkopfschraube (10) ausgebildet ist, wobei das Rastelement (22) mit der Halteplatte (20) verklebt oder verschweißt ist.

2. Befestigungsvorrichtung nach Anspruch 1, **dadurch gekennzeichnet, dass** über den Umfang verteilt mehrere Raststege (25) an der Öffnung (21) der Halteplatte (20) vorgesehen sind.

3. Befestigungsvorrichtung nach einem der vorhergehenden Ansprüche,
**dadurch gekennzeichnet, dass** die Halteplatte (20) mindestens doppelt so dick ist, insbesondere mehr als viermal so dick ist wie das Rastelement (22).

4. Befestigungsvorrichtung nach einem der vorhergehenden Ansprüche,
**dadurch gekennzeichnet, dass** das Rastelement (22) aus einem dünnen Blech hergestellt ist.

5. Befestigungsvorrichtung nach einem der vorhergehenden Ansprüche,
**dadurch gekennzeichnet, dass** die Halteplatte (20) an gegenüberliegenden Seiten Zähne (27) aufweist, die zumindest teilweise von einem Vorsprung (24) überdeckt sind.

6. Befestigungsvorrichtung nach Anspruch 5, **dadurch gekennzeichnet, dass** der Vorsprung (24) integral mit dem Rastelement (22) ausgebildet ist.

7. Befestigungsvorrichtung nach Anspruch 5 oder 6, **dadurch gekennzeichnet, dass** der mindestens eine Vorsprung (24) als biegbarer Steg ausgebildet ist, der zu der Ankerschiene (1) hin geneigt bezogen auf die Ebene des Rastelementes ausgerichtet ist.

8. Montageeinheit mit einer Ankerschiene (1) und mindestens einer Befestigungsvorrichtung nach einem der vorhergehenden Ansprüche, die an der Ankerschiene (1) fixiert ist.

9. Montageeinheit nach Anspruch 8, **dadurch gekennzeichnet, dass** die Halteplatte (20) dünner ausgebildet ist als ein Blech der Ankerschiene (1), an die die Verzahnung (5) ausgebildet ist.

10. Verfahren zur Montage einer Hammerkopfschraube (10) an einer Ankerschiene (1) mit den folgenden Schritten:
- Aufsetzen einer Halteplatte (20) mit mehreren Zähnen (27) für den Eingriff mit einer Verzahnung (5) an einer Ankerschiene (1) auf einen Gewindebolzen (12) der Hammerkopfschraube (10);
- lineares Verschieben der Halteplatte (20) auf den Gewindebolzen (12), wobei mindestens ein Raststeg (25) an dem Gewinde des Gewindebolzens (12) rastend geführt ist, wobei der mindestens eine Raststeg (25) integral mit einem plattenförmigen Rastelement (22) mit einer Öffnung (23) zum Durchführen des Gewindebolzens (12) der Hammerkopfschraube (10) ausgebildet ist und das Rastelement (22) mit der Halteplatte (20) verklebt oder verschweißt ist;
- Aufsetzen der Einheit aus Hammerkopfschraube (10) und Halteplatte (20) auf die Ankerschiene (1), wobei die Zähne (27) der Halteplatte (20) in Eingriff mit der Verzahnung (5) gelangen;
- Drehen der Hammerkopfschraube (10), und
- Montage eines Bauteils an dem Gewindebolzen (12) der Hammerkopfschraube (10).

## Claims

1. Securing device for an anchor rail (1) having a T-head bolt (10) and a retaining plate (20) which is fixed to the T-head bolt (10) and has a plurality of teeth (27) for engagement with a toothing (5) on the anchor rail (1), and an opening (21) through which a threaded bolt (12) of the T-head bolt is passed, wherein at least one latching web (25) projecting into the opening (21) of the retaining plate (20) is provided on the retaining plate (20), by means of which the retaining plate (20) can be latched to the threaded bolt (12) of the T-head bolt (10), wherein the at least one latching web (25) is integrally formed with a plate-shaped latching element (22) with an opening (23) for passing through the threaded bolt (12) of the T-head bolt (10), wherein the latching element (22) is glued or welded to the retaining plate (20).

2. Securing device according to claim 1, **characterized in that** a plurality of latching webs (25) distributed over the circumference are provided at the opening (21) of the retaining plate (20).

3. Securing device according to one of the preceding claims, **characterized in that** the retaining plate (20) is at least twice as thick, in particular more than four times as thick, as the latching element (22).

4. Securing device according to one of the preceding claims, **characterized in that** the latching element (22) is made of a thin sheet metal.

5. Securing device according to one of the preceding claims, **characterized in that** the retaining plate (20) has teeth (27) on opposite sides which are at least partially covered by a projection (24).

6. Securing device according to claim 5, **characterized in that** the projection (24) is formed integrally with the latching element (22).

7. Securing device according to claim 5 or 6, **characterized in that** the at least one projection (24) is designed as a bendable web which is oriented in an inclined manner towards the anchor rail (1) with respect to the plane of the latching element.

8. Installation unit having an anchor rail (1) and at least one securing device according to one of the preceding claims which is fixed to the anchor rail (1).

9. Installation unit according to claim 8, **characterized in that** the retaining plate (20) is of thinner design than a plate of the anchor rail (1) on which the toothing (5) is formed.

10. Method for installing a T-head bolt (10) on an anchor rail (1), comprising the following steps of:
- placing a retaining plate (20) having several teeth (27) for engagement with a toothing (5) on an anchor rail (1) on a threaded bolt (12) of the T-head bolt (10);
- linearly displacing the retaining plate (20) on the threaded bolt (12), wherein at least one latching web (25) is guided in a latching manner on the thread of the threaded bolt (12), wherein the at least one latching web (25) is integrally formed with a plate-shaped latching element (22) with an opening (23) for passing through the threaded bolt (12) of the T-head bolt (10) and the latching element (22) is glued or welded to the retaining plate;
- placing the unit consisting of the T-head bolt (10) and the retaining plate (20) on the anchor rail (1), wherein the teeth (27) of the retaining plate (20) come into engagement with the toothing (5);
- turning the T-head bolt (10), and
- installing a component on the threaded bolt (12) of the T-head bolt (10).

## Revendications

1. Dispositif de fixation pour un rail d'ancrage (1), avec un boulon à tête rectangulaire (10) et une plaque de maintien (20) fixée sur le boulon à tête rectangulaire (10) et possédant plusieurs dents (27) destinées à se mettre en prise avec une denture (5) du rail d'ancrage (1), et avec une ouverture (21) à travers laquelle est passé un goujon fileté (12) du boulon à tête rectangulaire, dans lequel est prévue sur la plaque de maintien (20) au moins une barrette d'enclenchement (25) qui dépasse dans l'ouverture (21) de la plaque de maintien (20) et au moyen de laquelle la plaque de maintien (20) peut être enclenchée sur le goujon fileté (12) du boulon à tête rectangulaire (10), dans lequel l'au moins une barrette d'enclenchement (25) est formée d'un seul tenant avec un élément d'enclenchement (22) en forme de plaque muni d'une ouverture (23) pour le passage du goujon fileté (12) du boulon à tête rectangulaire (10), dans lequel l'élément d'enclenchement (22) est collé ou soudé à la plaque de maintien (20).

2. Dispositif de fixation selon la revendication 1, **caractérisé en ce que** plusieurs barrettes d'enclenchement (25) sont prévues, réparties sur la circonférence, au niveau de l'ouverture (21) de la plaque de maintien (20).

3. Dispositif de fixation selon l'une des revendications précédentes, **caractérisé en ce que** la plaque de maintien (20) est au moins deux fois plus épaisse, en particulier plus de quatre fois plus épaisse que l'élément d'enclenchement (22).

4. Dispositif de fixation selon l'une des revendications précédentes, **caractérisé en ce que** l'élément d'enclenchement (22) est fabriqué à partir d'une tôle mince.

5. Dispositif de fixation selon l'une des revendications précédentes, **caractérisé en ce que** la plaque de maintien (20) présente, sur des côtés opposés, des dents (27) qui sont au moins en partie recouvertes par une saillie (24) de l'élément d'enclenchement (22)

6. Dispositif de fixation selon la revendication 5, **caractérisé en ce que** la saillie (24) est formée d'un seul tenant avec l'élément d'enclenchement (22).

7. Dispositif de fixation selon la revendication 5 ou 6, **caractérisé en ce que** l'au moins une saillie (24) est conformée comme une barrette flexible qui est inclinée vers le rail d'ancrage (1) par rapport au plan de l'élément d'enclenchement.

8. Unité de montage avec un rail d'ancrage (1) et au moins un dispositif de fixation selon l'une des revendications précédentes qui est fixé au rail d'ancrage (1).

9. Unité de montage selon la revendication 8, **caractérisée en ce que** la plaque de maintien (20) est plus mince qu'une tôle du rail d'ancrage (1) sur lequel la denture (5) est formée.

10. Procédé pour le montage d'un boulon à tête rectangulaire (10) sur un rail d'ancrage (1), comportant les étapes suivantes :
- pose d'une plaque de maintien (20), possédant plusieurs dents (27) destinées à se mettre en prise avec une denture (5) d'un rail d'ancrage (1), sur un goujon fileté (12) du boulon à tête rectangulaire (10) ;
- translation linéaire de la plaque de maintien (20) sur le goujon fileté (12), lors de laquelle au moins une barrette d'enclenchement (25) est enclenchée et guidée sur le filetage du goujon fileté (12), l'au moins une barrette d'enclenchement (25) étant formée d'un seul tenant avec un élément d'enclenchement (22) en forme de plaque et munie d'une ouverture (23) pour le passage du goujon fileté (12) du boulon à tête rectangulaire (10) et l'élément d'enclenchement (22) est collé ou soudé à la plaque de maintien (20);
- pose de l'unité formée par le boulon à tête rectangulaire (10) et la plaque de maintien (20) sur le rail d'ancrage (1), les dents (27) de la plaque de maintien (20) se mettant alors en prise avec la denture (5);
- vissage du boulon à tête rectangulaire (10) et
- montage d'un composant sur le goujon fileté (12) du boulon à tête rectangulaire (10).
